# EUROPEAN PATENT APPLICATION

(11) **EP 3 952 578 A1**
(43) Date of publication of application: **09.02.2022**
(21) Application number: 19921847.0
(22) Date of filing: 27.03.2019
(51) Int. Cl.: H04W 74/08, H04W 72/02, H04W 72/04

(54) **USER EQUIPMENT**

(71) Applicant: NTT DOCOMO, INC., Chiyoda-Ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2019/013482
(87) International publication number: WO 2020/194641

(57) **Abstract**

A user equipment UE (10) includes a control unit (15) which performs a 2-step random access procedure in which MsgA is transmitted and MsgB including a response to MsgA is received, a transmitting unit (11) which transmits MsgA, and a receiving unit (13) which receives MsgB. MsgA includes at least one of a random access preamble to be transmitted on a physical random access channel and predetermined information to be transmitted on a physical uplink channel. The control unit (15) obtains or decides at least one parameter among an adjustment value of a physical uplink channel transmission timing, information on allocation of the physical uplink channel, and an identifier allocated to the UE (10), outside of the 2-step random access procedure. The control unit (15) causes the transmitting unit (11) to transmit MsgA based on the obtained or decided parameter.

## Description

### TECHNICAL FIELD

The present invention relates to a user equipment that performs a 2-step random access procedure.

### BACKGROUND ART

The 3rd Generation Partnership Project (3GPP) specifies Long Term Evolution (LTE) and specifies LTE-Advanced (hereinafter, collectively referred to as LTE) for the purpose of further increasing the speed of LTE. Moreover, in the 3GPP, specification of a succeeding system of the LTE called 5G, New Radio (NR) or Next Generation (NG) has been studied.

In a contention type random access procedure of the NR system, in addition to the conventional 4-step random access procedure, a 2-step random access procedure has been studied (see Non Patent Document 1).

In the 2-step random access procedure, in the first step, a user equipment (UE) transmits, as MsgA to a radio base station (gNB), a random access preamble on a physical random access channel and predetermined information on a physical uplink channel. In the second step, the UE receives a random access response and information for performing contention resolution as MsgB from the gNB.

### PRIOR ART DOCUMENT

### NON-PATENT DOCUMENT

Non Patent Document 1: 3GPP TSG RAN Meeting #82 RP-182894 Sorrento, Italy, Dec. 10-13, 2018

### SUMMARY OF THE INVENTION

In the conventional 4-step random access procedure, the UE transmits the predetermined information on a physical uplink channel allocated by a random access response.

However, in the 2-step random access procedure, since the UE does not receive the random access response at the time of transmission of MsgA, the UE cannot know a physical uplink channel for transmitting the predetermined information.

Therefore, in the 2-step random access procedure, the UE cannot transmit the predetermined information included in MsgA on a physical uplink channel.

Therefore, the present invention has been made in view of such a situation, and an object of the present invention is to provide a user equipment capable of transmitting predetermined information included in MsgA on a physical uplink channel in a 2-step random access procedure.

A user equipment (10) according to an aspect of the present invention includes: a control unit (15) which performs a 2-step random access procedure in which a first message (MsgA) is transmitted and a second message (MsgB) including a response to the first message (MsgA) is received; a transmitting unit (11) which transmits the first message (MsgA); and a receiving unit (13) which receives the second message (MsgB), wherein the first message (MsgA) includes at least one of a random access preamble to be transmitted on a physical random access channel and predetermined information to be transmitted on a physical uplink channel, and the control unit (15) obtains or decides at least one parameter among an adjustment value of a physical uplink channel transmission timing, information on allocation of the physical uplink channel, and an identifier allocated to the user equipment (10), outside of the 2-step random access procedure, and causes the transmitting unit (11) to transmit the first message (MsgA) based on the obtained or decided parameter.

### BRIEF DESCRIPTION OF DRAWINGS

Fig. 1 is an overall schematic configuration diagram of a radio communication system 1.
Fig. 2 is a functional block configuration diagram of a user equipment (UE) 10.
Fig. 3 is a diagram illustrating an example of a sequence of a 2-step random access procedure.
Fig. 4 is a diagram illustrating an example of a flowchart of physical uplink channel transmission timing processing.
Fig. 5 is a diagram illustrating an example of a flowchart of physical uplink channel allocation processing.
Fig. 6 is a diagram illustrating an example of a flowchart of processing for configuring an identifier allocated to the UE 10.
Fig. 7 is a diagram illustrating an example of a hardware configuration of the UE 10.

### MODES FOR CARRYING OUT THE INVENTION

Hereinafter, embodiments will be described with reference to the drawings. Note that the same functions and configurations are denoted by the same or similar reference numerals, and a description thereof is omitted as appropriate.

### (1) Overall Schematic Configuration of Network

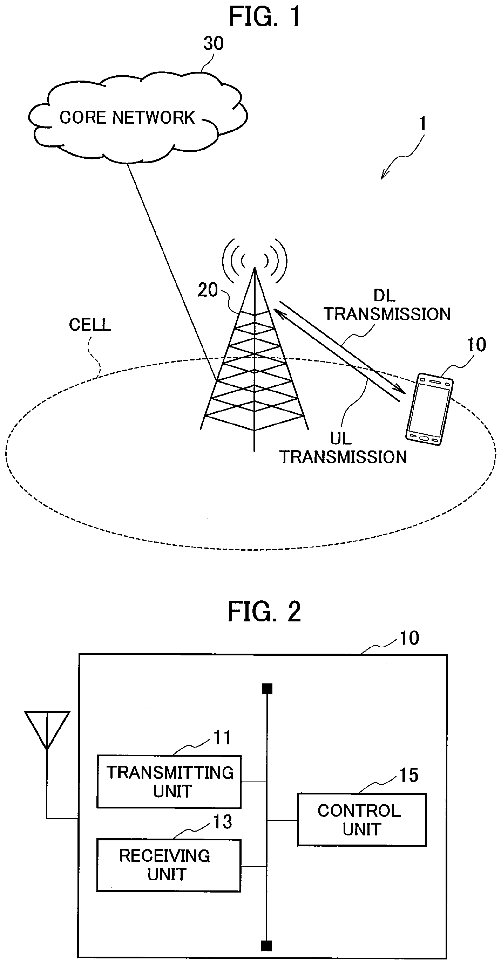

Fig. 1 is an overall schematic configuration diagram of a radio communication system 1 according to an embodiment.

The radio communication system 1 includes a UE 10, a gNB 20, and a core network 30.

The UE 10 resides in a cell that is subordinate to the gNB 20. The UE 10 performs radio communication according to NR with the gNB 20 and the core network 30. The UE 10 performs a 2-step random access procedure in order to establish synchronization or perform scheduling request between the UE 10 and the gNB 20.

The UE 10 obtains or decides an adjustment value of a physical uplink channel transmission timing, information on allocation of a physical uplink channel, and an identifier allocated to the UE 10 that are used in the 2-step random access procedure, outside of the 2-step random access preamble procedure.

The physical uplink channel is, for example, a Physical Uplink Shared Channel (PUSCH). The identifier allocated to the UE 10 is, for example, a temporary Cell-Ratio Network Temporary Identifier (temporary C-RNTI).

The gNB 20 performs radio communication according to the NR with the core network 30. The gNB 20 can notify the UE 10 of information regarding the adjustment value of the physical uplink channel transmission timing, the information on allocation of the physical uplink channel, or the identifier allocated to the UE 10, outside of the 2-step random access preamble procedure.

The core network 30 performs communication with the UE 10 via the gNB 20. The core network 30, instead of the gNB 20, may notify the UE 10 of information regarding the adjustment value of the physical uplink channel transmission timing, the information on allocation of the physical uplink channel, or the identifier allocated to the UE 10, outside of the 2-step random access preamble procedure. In this case, the core network 30 also notifies the gNB 20 of the information notified to the UE 10.

### (2) Functional Block Configuration of UE 10

Next, a functional block configuration of the UE 10 will be described. Hereinafter, only portions related to the features in the present embodiment will be described. Therefore, the UE 10 includes other functional blocks that are not directly related to the features in the present embodiment.

Fig. 2 is a functional block configuration diagram of the UE 10. Note that a hardware configuration of the UE 10 will be described later. As illustrated in Fig. 2, the UE 10 includes a transmitting unit 11, a receiving unit 13, and a control unit 15.

The transmitting unit 11 receives an uplink signal according to the NR to the gNB 20. For example, in the 2-step random access procedure, the transmitting unit 11 transmits, as MsgA to the gNB 20, a random access preamble on a physical random access channel and predetermined information on a physical uplink channel.

As described above, MsgA includes the random access preamble to be transmitted on a physical random access channel and the predetermined information to be transmitted on a physical uplink channel.

Note that MsgA may include only the predetermined information to be transmitted on a physical uplink channel. Further, MsgA may include only the random access preamble to be transmitted on a physical random access channel.

The receiving unit 13 receives a downlink signal according to the NR from the gNB 20. For example, in the 2-step random access procedure, the receiving unit 13 receives, as MsgB from the gNB 20, a random access response and information for performing contention resolution. Note that the random access response may be expressed as a response to MsgA.

The receiving unit 13 can receive, from the gNB 20, the adjustment value of the physical uplink channel transmission timing, the information on allocation of the physical uplink channel, and the identifier allocated to the UE 10, outside of the 2-step random access procedure.

In the 2-step random access procedure, the control unit 15 adjusts a transmission timing of the predetermined information included in MsgA based on the adjustment value of the physical uplink channel transmission timing that is obtained or decided outside of the 2-step random access procedure.

In the 2-step random access procedure, the control unit 15 performs allocation of a physical uplink channel for transmitting the predetermined information included in MsgA, based on the information on allocation of the physical uplink channel that is obtained or decided outside of the 2-step random access procedure.

In the 2-step random access procedure, the control unit 15 performs scrambling of the physical uplink channel for transmitting the predetermined information included in MsgA, based on the identifier allocated to the UE 10 that is obtained or decided outside of the 2-step random access procedure.

### (3) Operation of Radio Communication System 1

Next, operation of the radio communication system 1 will be described. Specifically, an operation related to the 2-step random access procedure will be described.

Note that the 2-step random access procedure is a contention-type random access procedure and is studied in order to complete the random access procedure in a short period of time.

### (3.1) 2-Step Random Access Procedure

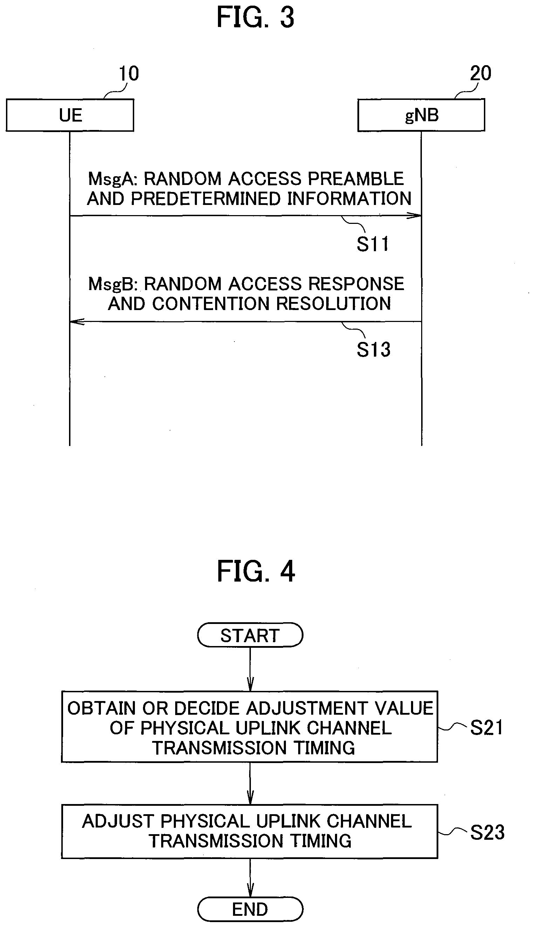

First, the 2-step random access procedure will be described. Fig. 3 is a diagram illustrating an example of a sequence of the 2-step random access procedure.

As illustrated in Fig. 3, in the first step, the UE 10 transmits, as MsgA to the gNB 20, a random access preamble on a physical random access channel, and predetermined information on a physical uplink channel (S11). The predetermined information includes an identifier of the UE 10, such as a CCCH SDU or a C-RNTI MAC CE, and the like.

In the second step, the UE 10 receives, as MsgB from the gNB 20, a random access response and information for performing contention resolution (S13). When the contention resolution succeeds, the 2-step random access procedure is completed successfully.

The 2-step random access procedure may be expressed as follows: a random access procedure using MsgA (a procedure in which a random access preamble and Msg3/PUSCH are transmitted), a random access procedure using MsgB (a procedure in which a random access response and Msg4 are received), a random access procedure in which MsgB is for contention resolution, a random access procedure using MsgA and MsgB, a simplified random access procedure, a fast random access procedure, a random access procedure in which Msg3 is transmitted before receiving a random access response, a random access procedure that is not a conventional random access procedure, or a random access procedure using a predetermined message.

Note that Msg3 described above is a message used when the UE 10 transmits, to the gNB 20, the predetermined information on a physical uplink channel allocated by a random access response in the third step of the conventional 4-step random access procedure. Further, Msg4 described above is a message used when the UE 10 receives, from the gNB 20, information for performing contention resolution in the fourth step of the conventional 4-step random access procedure.

### (3.2) Transmission Timing Processing

Next, transmission timing processing performed by the UE 10 to transmit the predetermined information included in MsgA to the gNB 20 in the first step of the 2-step random access procedure will be described.

Fig. 4 is a diagram illustrating an example of a flowchart of physical uplink channel transmission timing processing. As illustrated in Fig. 4, the UE 10 obtains or decides the adjustment value (for example, a Timing Advance command (TA command) value) of the physical uplink channel transmission timing outside of the 2-step random access procedure (Step S21).

For example, the UE 10 fixes the TA command value to "0", similarly to an adjustment value of a physical random access channel transmission timing (Option 1).

The UE 10 may obtain the TA command value from the gNB 20 (Option 2). In this case, the TA command value may be notified by using a signal of a Radio Resource Control (RRC) layer, a Medium Access Control (MAC) layer, or a Physical (PHY) layer. Note that in a case where the UE 10 obtains the TA command value from the core network 30 instead of the gNB 20, the TA command value may be notified by using a signal of a Non-Access Stratum (NAS) layer, in addition to the layers described above.

The gNB 20 notifies the UE 10 of a temporal absolute value (for example, 1 µs) as the TA command value. Further, the gNB 20 may notify the UE 10 in advance of an index allocated to each of a plurality of temporal absolute values, and notify the UE 10 of one of the plurality of indices as the TA command value.

In a case where the UE 10 already has the adjustment value of the transmission timing, the latest TA command value (for example, a value of N_TA) may be used (Option 3). For example, the UE 10 performs the 4-step random access procedure in advance and retains a TA command value included in Msg2 received in the second step of the 4-step random access procedure. The UE 10 uses the retained TA command value as the adjustment value of the physical uplink channel transmission timing in the subsequent 2-step random access procedure.

Option 3 may be used only in a case where N_TA is already retained in a Timing Advance Group (TAG) including a cell or BWP in which MsgA is transmitted in the 2-step random access procedure (for example, in a case where a timing advance timer is started).

As described above, the UE 10 can apply different TA command values as the adjustment value of the physical random access channel transmission timing and the adjustment value of the physical uplink channel transmission timing. For example, in Option 2, the gNB 20 notifies the UE 10 of individual TA command values as the adjustment value of the physical random access channel transmission timing and the adjustment value of the physical uplink channel transmission timing, respectively.

Further, in Option 2, the gNB 20 notifies the UE 10 of the TA command value, and the UE 10 may apply the TA command value to one of the adjustment value of the physical random access channel transmission timing and the adjustment value of the physical uplink channel transmission timing. In this case, the UE 10 applies a value obtained by adding a fixed offset to the TA command value, to the other one of the adjustment value of the physical random access channel transmission timing and the adjustment value of the physical uplink channel transmission timing.

Moreover, the UE 10 may change the option described above based on conditions. For example, in a case of receiving an instruction from the gNB 20 or the core network 30, the UE 10 adopts Option 2, and in a case of not receiving an instruction from the gNB 20 or the core network 30, the UE 10 adopts Option 1 or Option 3.

Referring back to Fig. 4, the UE 10 adjusts the physical uplink channel transmission timing based on the adjustment value of the physical uplink channel transmission timing that is obtained or decided in the first step of the 2-step random access procedure (Step S23).

### (3.3) Physical Uplink Channel Allocation Processing

Next, physical uplink channel allocation processing performed by the UE 10 to transmit the predetermined information included in MsgA to the gNB 20 in the first step of the 2-step random access procedure will be described.

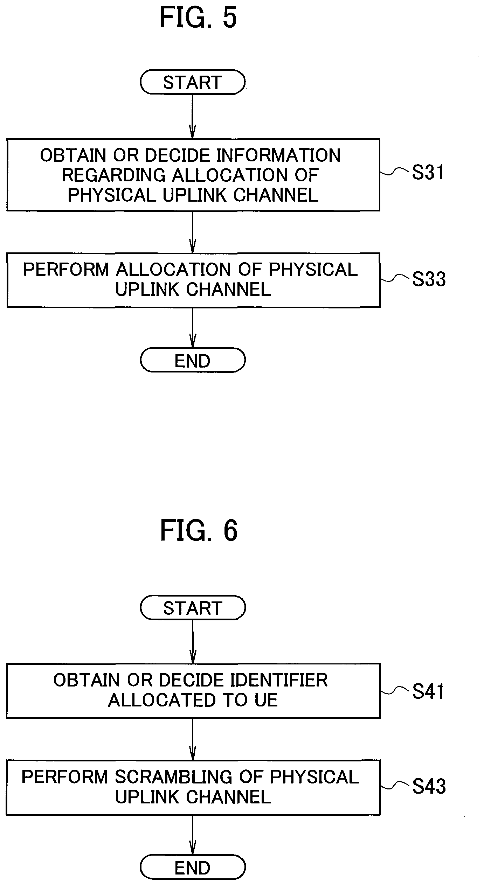

Fig. 5 is a diagram illustrating an example of a flowchart of the physical uplink channel allocation processing. As illustrated in Fig. 5, the UE 10 obtains or decides the information on allocation of the physical uplink channel for transmitting predetermined information, outside of the 2-step random access procedure (Step S31).

Specifically, the UE 10 obtains or decides uplink resource information and transmission power parameter information as the information on allocation of the physical uplink channel.

For example, the UE 10 obtains, as the uplink resource information from the gNB 20, information associated with information on allocation of the physical random access channel on which the random access preamble included in MsgA is to be transmitted.

In this case, the UE 10 may obtain, from the gNB 20, an offset value associated with at least one of a resource position in time domain of the physical random access channel and a resource position in frequency domain of the physical random access channel. When the UE 10 obtains the offset value, the UE 10 decides, as a resource position of the physical uplink channel, a resource position obtained by adding the offset value to at least one of the resource position in time domain of the physical random access channel and the resource position in frequency domain of the physical random access channel.

The UE 10 obtains, for example, information associated with transmission power of the physical random access channel as the transmission power parameter information from the gNB 20.

In this case, the UE 10 obtains an offset value associated with the transmission power of the physical random access channel from the gNB 20. When the offset value is obtained, the UE 10 decides transmission power obtained by adding the offset value to the transmission power of the physical random access channel as transmission power of the physical uplink channel.

Note that the UE 10 may change the transmission power of the physical uplink channel for each transport block size (TBS) of the physical uplink channel, each modulation and coding scheme (MCS) used for the physical uplink channel, each number of resource blocks of the physical uplink channel, or each combination thereof, by using these parameters as indices.

Further, the UE 10 may apply different values to at least one of the uplink resource information and the transmission power parameter information, for each channel quality (for example, Channel State Information (CSI) such as pathloss and Channel Quality Indicator (CQI), Signal-to-Noise Ratio (SNR), Signal-to-Interference-plus-Noise Ratio (SINR), or the like), or each size of data to be transmitted as MsgA or data payload (for example, a MAC Protocol Data Unit (PDU), a transport block, a MAC subPDU, a MAC Service Data Unit (SDU), a MAC Control Element (CE), or a combination thereof).

Referring back to Fig. 5, the UE 10 performs allocation of a physical uplink channel, that is, allocation of a resource position and transmission power of the physical uplink channel, based on the information on allocation of the physical uplink channel that is obtained or decided in the first step of the 2-step random access procedure (Step S23).

### (3.4) Processing for Configuring Identifier Allocated to UE 10

Next, processing for configuring the identifier (for example, temporary C-RNTI) allocated to the UE 10 used for scrambling of the physical uplink channel performed by the UE 10 in the first step of the 2-step random access procedure will be described.

Fig. 6 is a diagram illustrating an example of a flowchart of the processing for configuring the identifier allocated to the UE 10. As illustrated in Fig. 6, the UE 10 obtains or decides the identifier allocated to the UE 10 outside of the 2-step random access procedure (Step S31).

For example, the UE 10 decides the identifier allocated to the UE 10 by using a formula (RA-RNTI = 1 + s_id + 14 × t_id + 14 × 80 × f_id + 14 × 80 × 8 × ul_carrier_id) for calculating a Random Access Radio Network Temporary Identifier (RA-RNTI) that is defined in TS 38.321 (Option 1).

Here, s_id is an index (0 ≤ s_id < 14) of a first OFDM symbol used for MsgA transmission. t_id is an index (0 ≤ t_id < 80) of a first slot in a system frame used for MsgA transmission. f_id is a frequency domain index (0 ≤ f_id < 8) used for MsgA transmission. ul_carrier _id is an uplink carrier (ul_carrier _id = 0 for NUL carrier and ul_carrier_id = 1 for SUL carrier) used for MsgA transmission.

Note that the index of the first OFDM symbol used for MsgA transmission, the index of the first slot in the system frame, the frequency domain index, and the uplink carrier each are used as information related to transmission of the random access preamble or predetermined information included in MsgA.

The UE 10 may obtain the identifier allocated to the UE 10 from the gNB 20 (Option 2).

In this case, the gNB 20 may notify the UE 10 of the identifier for each physical random access channel for transmitting the random access preamble included in MsgA or for each physical uplink channel for transmitting the predetermined information included in MsgA. Further, the core network 30 may notify the UE 10 of the identifier by using broadcast information for each cell or BWP. Instead, the core network 30 may notify the UE 10 of the identifier for each UE or UE group by using broadcast information.

The UE 10 may fix the identifier allocated to the UE 10 to a fixed value (Option 3). For example, the UE 10 fixes all bit values allocated to the identifier to 0 or 1.

The UE 10 may calculate a sequence having the same bit length as that of the identifier allocated to the UE 10 based on an identifier other than the identifier allocated to the UE 10, and may use the calculated sequence as the identifier allocated to the UE 10 (Option 4).

For example, in a case where the identifier allocated to the UE 10 is the temporary C-RNTI, the UE 10 obtains a sequence having the same bit length as that of the temporary C-RNTI from resume ID or Temporary Mobile Subscriber Identity (TMSI) by using a hash function to use the obtained sequence as the temporary C-RNTI.

Referring back to Fig. 6, the UE 10 performs scrambling of the physical uplink channel based on the identifier allocated to the UE 10 that is obtained or decided in the first step of the 2-step random access procedure (step S43).

### (5) Action and Effect

According to the above-described embodiment, the UE 10 includes the control unit 15 which performs the 2-step random access procedure in which MsgA is transmitted and MsgB including a response to MsgA is received, the transmitting unit 11 which transmits MsgA, and the receiving unit 13 which receives MsgB.

MsgA includes at least one of the random access preamble to be transmitted on a physical random access channel and the predetermined information to be transmitted on a physical uplink channel.

The control unit 15 obtains or decides at least one parameter among the adjustment value of the physical uplink channel transmission timing, the information on allocation of the physical uplink channel, and the identifier allocated to the UE 10, outside of the 2-step random access procedure. The control unit 15 causes the transmitting unit 11 to transmit MsgA based on the obtained or decided parameter.

With such a configuration, the UE 10 can obtain or decide at least one parameter among the adjustment value of the physical uplink channel transmission timing, the information on allocation of the physical uplink channel, and the identifier allocated to the UE 10, outside of the 2-step random access procedure, even without receiving the random access response.

Note that in the conventional 4-step random access preamble procedure, the adjustment value of the physical uplink channel transmission timing, the information on allocation of the physical uplink channel, and the identifier allocated to the UE 10 are included in the random access response as a TA command, a UL grant, and a temporary C-RNTI, respectively.

Therefore, the UE 10 can transmit the predetermined information included in MsgA on the physical uplink channel in the 2-step random access procedure.

According to the present embodiment, the control unit 15 decides the parameter based on the information on allocation of the physical random access channel.

According to the present embodiment, the control unit 15 obtains the parameter from the gNB 20 or the core network 30 via the receiving unit 13.

According to the present embodiment, the control unit 15 decides the parameter by using a fixed value.

According to the present embodiment, in a case where the UE 10 has an adjustment value of a transmission timing, the control unit 15 determines the parameter by using the adjustment value of the transmission timing.

According to the present embodiment, the control unit 15 decides the parameter based on an identifier other than the identifier allocated to the UE 10.

With such a configuration, the UE 10 can set the parameter in the 2-step random access procedure, and thus can transmit the predetermined information included in MsgA on the physical uplink channel.

### (6) Other Embodiments

Hereinabove, although the contents of the present invention have been described according to the embodiments, the present invention is not limited to these descriptions, and it is obvious to those skilled in the art that various modifications and improvements can be made.

Moreover, the block diagram (Fig. 2) used for describing the embodiments illustrates blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as described above, the realization method is not particularly limited to any one method.

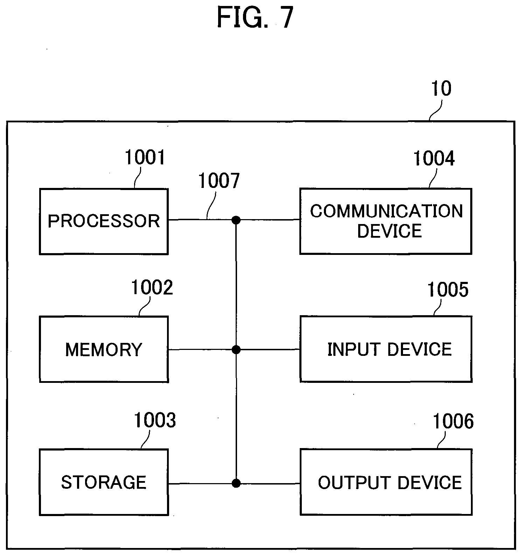

Furthermore, the UE 10 described above may function as a computer that performs the processing of the radio communication method of the present disclosure. Fig. 7 is a diagram illustrating an example of a hardware configuration of the device. As illustrated in Fig. 7, the device may be configured as a computer device including a processor 1001, a memory 1002, a storage 1003, a communication device 1004, an input device 1005, an output device 1006, a bus 1007, and the like.

Furthermore, in the following description, the term "device" can be replaced with a circuit, device, unit, and the like. A hardware configuration of the device may be constituted by including one or plurality of the devices illustrated in the figure, or may be constituted without including some of the devices.

The functional blocks of the device are realized by any of hardware elements of the computer device or a desired combination of the hardware elements.

Moreover, the processor 1001 performs operation by loading a predetermined software (program) on hardware such as the processor 1001 and the memory 1002, controls communication via the communication device 1004 and controls at least one of reading and writing of data on the memory 1002 and the storage 1003, thereby realizing various functions of the device.

The processor 1001, for example, operates an operating system to control the entire computer. The processor 1001 may be configured with a central processing unit (CPU) including an interface with a peripheral device, a control device, a computing device, a register, and the like.

Moreover, the processor 1001 reads a program (program code), a software module, data, and the like from at least one of the storage 1003 and the communication device 1004 into the memory 1002, and executes various processing according to them. As the program, a program that is capable of executing on the computer at least a part of the operation described in the above embodiments, is used. Alternatively, various processing described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 may be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 includes at least one of an optical disk such as Compact Disc ROM (CD-ROM), a hard disk drive, a flexible disk, a magneto-optical disk (for example, a compact disk, a digital versatile disk, and Blu-ray (Registered Trademark) disk), a smart card, a flash memory (for example, a card, a stick, and a key drive), a floppy (Registered Trademark) disk, a magnetic strip, and the like. The storage 1003 may be called an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 includes a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information therebetween. The bus 1007 may be constituted by a single bus or may be constituted by separate buses between the devices.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by the hardware. For example, the processor 1001 may be implemented by using at least one of these hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB) and System Information Block (SIB)), other signals, or a combination thereof. The RRC signaling may be called an RRC message, for example, or may be an RRC Connection Setup message, RRC Connection Reconfiguration message, or the like.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal can be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by a value (0 or 1) represented by one bit or by a Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure are used interchangeably.

Furthermore, the information, the parameter, and the like described in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information elements can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, a communication service can be provided by a base station subsystem (for example, a small base station for indoor use (Remote Radio Head: RRH)).

The term "cell" or "sector" refers to a part or all of the coverage area of at least one of a base station and a base station subsystem that perform the communication service in this coverage.

In the present disclosure, the terms "mobile station (MS)", "user terminal", "user equipment (UE)", "terminal" and the like can be used interchangeably.

The mobile station may be called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same applies). For example, each of the aspects/embodiments of the present disclosure may be applied to a configuration that allows communication between a base station and a mobile station to be replaced with a communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the radio frequency region, the microwave region, and the light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles may include a plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### INDUSTRIAL APPLICABILITY

The user equipment described above can transmit predetermined information included in MsgA on a physical uplink channel in the 2-step random access procedure, which is useful.

### EXPLANATION OF REFERENCE NUMERALS

- 1: Radio communication system
- 10: UE
- 11: Transmitting unit
- 13: Receiving unit
- 15: Control unit
- 20: gNB
- 30: Core network
- 1001: Processor
- 1002: Memory
- 1003: Storage
- 1004: Communication device
- 1005: Input device
- 1006: Output device
- 1007: Bus

## Claims

1. A user equipment comprising:
a control unit which performs a 2-step random access procedure in which a first message is transmitted and a second message including a response to the first message is received;
a transmitting unit which transmits the first message; and
a receiving unit which receives the second message,
wherein the first message includes at least one of a random access preamble to be transmitted on a physical random access channel and predetermined information to be transmitted on a physical uplink channel, and
the control unit obtains or decides at least one parameter among an adjustment value of a physical uplink channel transmission timing, information on allocation of the physical uplink channel, and an identifier allocated to the user equipment, outside of the 2-step random access procedure, and causes the transmitting unit to transmit the first message based on the obtained or decided parameter.

2. The user equipment according to claim 1, wherein the control unit decides the parameter based on the information on allocation of the physical random access channel.

3. The user equipment according to claim 1, wherein the control unit obtains the parameter from a network via the receiving unit.

4. The user equipment according to claim 1, wherein the control unit decides the parameter by using a fixed value.

5. The user equipment according to claim 1, wherein in a case where the user equipment has an adjustment value of a transmission timing, the control unit decides the parameter by using the adjustment value of the transmission timing.

6. The user equipment according to claim 1, wherein the control unit decides the parameter based on an identifier other than the identifier allocated to the user equipment.
